# EUROPEAN PATENT SPECIFICATION

(11) **EP 3 331 927 B1**
(45) Date of publication and mention of the grant of the patent: **26.02.2025**
(21) Application number: 16750729.2
(22) Date of filing: 03.08.2016
(51) Int. Cl.: C08F 2/34, C08F 110/06, C08F 4/651, C08F 4/649

(54) **GAS-PHASE PROCESS FOR THE POLYMERIZATION OF PROPYLENE**
GASPHASENVERFAHREN ZUR POLYMERISIERUNG VON PROPYLEN
PROCÉDÉ EN PHASE GAZEUSE POUR LA POLYMÉRISATION DU PROPYLÈNE

(30) Priority: 04.08.2015 EP 15179708
(43) Date of publication of application: 13.06.2018
(73) Proprietor: Basell Poliolefine Italia S.r.l., 20121 Milano (IT)
(72) Inventor: MORINI, Giampiero, 44122 Ferrara (IT); COVEZZI, Massimo, 44122 Ferrara (IT); DALL'OCCO, Tiziano, 44122 Ferrara (IT); LIGUORI, Dario, 44122 Ferrara (IT); PIEMONTESI, Fabrizio, 44122 Ferrara (IT); VITALE, Gianni, 44122 Ferrara (IT)
(74) Representative: LyondellBasell
(86) International application number: PCT/EP2016/068555
(87) International publication number: WO 2017/021454

(56) References cited:
- EP-A1- 2 607 386
- WO-A1-01/04165
- WO-A1-2009/083522
- WO-A1-2015/062787
- ES-T3- 2 372 351
- US-A- 4 857 613
- US-A1- 2012 083 576
- US-A1- 2014 121 339
- US-A1- 2014 316 069
- US-B1- 6 468 938

## Description

### FIELD OF THE INVENTION

The present disclosure relates to a gas-phase polymerization process for the polymerization of propylene optionally in mixture with other olefins. In particular, it relates to a gas-phase process for the polymerization of propylene carried out in the presence of a specific catalyst system. In addition, it also relates to the use of a specific catalyst system for generating a self-extinguishing propylene gas-phase polymerization process.

### BACKGROUND OF THE INVENTION

Processes for the polymerization of propylene are known which are carried out in the gas phase in fluidized or mechanically stirred bed reactors, in the presence of catalysts obtained from compounds of transition metals belonging to groups IV, V or VI of the Periodic Table of the Elements and aluminum alkyl compounds generating, in high yields, isotactic polypropylene being more than 95%wt insoluble in xylene at 25°C.

The polymer is obtained in the form of granules having a more or less regular morphology depending on the morphology of the catalyst; the dimension of the granules, which depends on the original dimension of the catalyst particles and on reaction conditions, is generally distributed around an average value.

In these types of processes the heat of reaction is removed by means of a heat exchanger placed inside the reactor or in the recycle line of the reaction gas.

A generally encountered problem in polymerization processes of this type results from the presence of very fine polymer particles which are produced either from already existing fine catalyst particles or from the breakage of the catalyst itself.

These fine particles tend to deposit onto, and electrostatically adhere to, the inner walls of the reactor and of the heat exchanger; as a result they grow in size by polymerization also causing an insulating effect and a lower heat transfer resulting in the formation of hot spots in the reactor.

These effects are enhanced when the gas-phase alpha-olefin polymerization process is carried out in the presence of highly active catalysts such as those comprising the reaction product of an aluminum alkyl with a titanium compound supported on a magnesium halide in active form.

As a consequence, a loss in fluidization efficiency and homogeneity generally occurs; for example catalyst feeding interruption may occur as well as clogging of the polymer discharge system; furthermore, excessive temperature can result in particles melting with the formation of layers of thin agglomerates which adhere to the reactor walls and in the formation of agglomerates which may clog the gas distribution plate.

These drawbacks lead to poor process reproducibility and can lead to a forced interruption of the run in order to remove deposits which have formed inside the reactor even after relatively short times.

In order to reduce the extent of catalyst fragmentation, the catalyst can be subject to a pre-polymerization step carried out under mild conditions which is believed to lower the tendency of the catalyst to break in the initial stages of the main polymerization process. For example, WO2009/083522 discloses a prepolymerized catalyst component having average particle size equal to or lower than 30 nm comprising a solid catalyst component which comprises magnesium halide, a titanium compound having at least a Ti-halogen bond and at least two electron donor compounds one of which being selected from 1,3-diethers and the other one being selected from esters of aromatic mono or dicarboxylic acids. In the final solid catalyst component, the amount of 1,3-diether is relatively low.

Typically the pre-polymerization step is performed in a section of the plant immediately connected to the main polymerization section so that the prepolymer produced is directly fed to the main polymerization reactor (also called prepoly in-line) and is characterized by relatively high values of monomer conversion (50-2000 gpolymer/gcat). Alternatively, it can be carried out in a dedicated section and the prepolymer produced is stored for future use. In this latter case, even lower values of monomer conversion rates (0.1- 50 g Polymer/gcat) are possible. In both cases however, while the pre-polymerization may reduce the extent of improper catalyst fragmentation, it has no effect in reducing the negative effects of the polymerization activity deriving from fine catalyst particles which are anyhow present either because already existing in the original catalyst or produced by the catalyst fragmentation.

The solutions proposed to avoid these drawbacks involve either trying to depress or kill the catalyst activity or reducing or eliminating the electrostatic voltage.

Patent Application EP-359444 describes the introduction into the polymerization reactor of small amounts (generally smaller than 0.1 ppm with respect to the polymerization mixture) of a retarder selected from polymerization inhibitors or substances able to poison the catalyst, in order to reduce the olefin polymerization rate. However, as described in the same patent application, the use of larger quantities of the retarder adversely affects both the quality and properties of the polymer produced, such as the melt index, the melt flow ratio and/or the stereoregularity of the polymer, as well as reducing the efficiency of the process.

U.S. Patent 4,739,015 describes the use of oxygen containing gaseous products and liquid or solid compounds containing active hydrogens to prevent the formation of agglomerates and reactor fouling in processes for preparing heterophasic propylene polymers. Among the compounds containing active hydrogens ethanol, methanol, ethylene glycol, propylene glycol and diethylene glycol are cited.

These compounds, known as polymerization inhibitors, must be used in an amount of a few ppm with respect to the polymer in order not to deactivate the catalyst; at such concentrations they are not effective as to a selective deactivation of the fine catalyst particles, whereas at higher concentrations the polymerization does not take place.

Several documents such as WO2005/030815, WO2011/084628 propose carrying out the polymerization of propylene, either in slurry or gas-phase, in the presence of a mixed external electron donor system comprising a selectivity control agent (SCA) and a so called activity limiting agent (ALA). While the SCA can be an alkyl-alkoxy silane the ALA is typically selected among esters of mono or polycarboxylic fatty acids. The ALA should provide self-extinguishing properties which involve a strongly decrease of the catalyst activity as a consequence of the temperature increase above a threshold value. However, effective self-extinguishing properties are reached only when a substantial amount of ALA is used which leads to a total SCA+ALA/Ti ratio higher than that used when the SCA was the only donor. As a result, also the basic catalyst activity, i.e., the activity below the threshold value (about 70°C), is depressed. On the other hand, lowering the amount of SCA to reach a total SCA+ALA/Ti ratio which ensures higher basic catalyst activity would involve production of polypropylene with a stereoregularity insufficient for many applications.

It is therefore felt the need of a gas-phase polymerization process carried out with a catalyst and/or conditions able to result in a polypropylene product having good morphological properties, high stereoregularity, and capable to show self-extinguishing properties such that the negative effects caused by the fine catalyst particle polymerization can be selectively solved or mitigated.

### SUMMARY OF THE INVENTION

Accordingly, it is an object of the present disclosure a gas-phase process for the homo or copolymerization of propylene with other olefins, carried out in the presence of a catalyst system comprising:
(a) a solid catalyst component comprising Mg, Ti, halogen, an electron donor selected from 1,3-diethers and an olefin polymer in an amount ranging from 10 to 85% of the total weight of the solid catalyst component and in which the 1,3-diether/Mg molar ratio ranges from 0.030 to 0.150;
(b) an aluminum alkyl compound and
(c) an external electron donor compound (ED) selected from silicon compounds, ethers, esters, amines, heterocyclic compounds, ketones and any mixture thereof; said components (b) and (c) being employed in amounts such that the Al/(ED) molar ratio ranges from 2 to 200.

### DETAILED DESCRIPTION OF THE INVENTION

Preferably, the solid catalyst component has an average particle size ranging from 10 to 100 µm more preferably from 20 to 80 µm.

Among the 1,3-diethers mentioned above, particularly preferred are the compounds of formula (I) 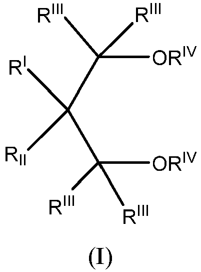 where R¹ and R^{II} are the same or different and are hydrogen or linear or branched C₁-C₁₈ hydrocarbon groups which can also form one or more cyclic structures; R^{III} groups, equal or different from each other, are hydrogen or C₁-C₁₈ hydrocarbon groups; R^{IV} groups equal or different from each other, have the same meaning of R^{III} except that they cannot be hydrogen; each of R^{I} to R^{IV} groups can contain heteroatoms selected from halogens, N, O, S and Si.

Preferably, R^{IV} is a 1-6 carbon atom alkyl radical and more particularly a methyl while the R^{III} radicals are preferably hydrogen. Moreover, when R^{I} is methyl, ethyl, propyl, or isopropyl, R^{II} can be ethyl, propyl, isopropyl, butyl, isobutyl, tert-butyl, isopentyl, 2-ethylhexyl, cyclopentyl, cyclohexyl, methylcyclohexyl, phenyl or benzyl; when R^{I} is hydrogen, R^{II} can be ethyl, butyl, sec-butyl, tert-butyl, 2-ethylhexyl, cyclohexylethyl, diphenylmethyl, p-chlorophenyl, 1-naphthyl, 1-decahydronaphthyl; R¹ and R^{II} can also be the same and can be ethyl, propyl, isopropyl, butyl, isobutyl, tert-butyl, neopentyl, phenyl, benzyl, cyclohexyl, cyclopentyl.

Specific examples of ethers that can be advantageously used include: 2-(2-ethylhexyl)1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2(1-naphthyl)-1,3-dimethoxypropane, 2(p-fluorophenyl)-1,3-dimethoxypropane, 2(1-decahydronaphthyl)-1,3-dimethoxypropane, 2(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane,2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimetoxypropane, 2,2-di-sec-butyl-1,3-dimetoxypropane, 2,2-di-tert-butyl-1,3-dimethoxypropane, 2,2-dineopentyl-1,3-dimethoxypropane, 2-iso-propyl-2-isopentyl-1,3-dimethoxypropane, 2-phenyl-2-benzyl-1,3-dimetoxypropane, 2-cyclohexyl-2-cyclohexylmethyl-1,3-dimethoxypropane.
Furthermore, particularly preferred are the 1,3-diethers of formula (II) 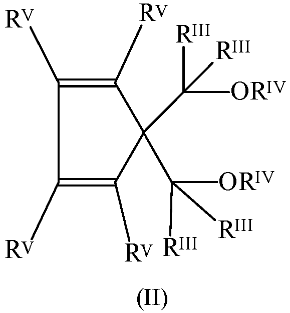 where the radicals R^{IV} have the same meaning defined in formula (I) and the radicals R^{III} and R^{V}, equal or different to each other, are selected from the group consisting of hydrogen; halogens, preferably Cl and F; C₁-C₂₀ alkyl radicals, linear or branched; C₃-C₂₀ cycloalkyl, C₆-C₂₀ aryl, C₇-C₂₀ alkylaryl and C₇-C₂₀ arylalkyl radicals and two or more of the R^{V} radicals can be bonded to each other to form condensed cyclic structures, saturated or unsaturated, optionally substituted with R^{VI} radicals selected from the group consisting of halogens, preferably Cl and F; C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals; said radicals R^{V} and R^{VI} optionally containing one or more heteroatoms as substitutes for carbon or hydrogen atoms, or both.

Preferably, in the 1,3-diethers of formulae (I) and (II) all the R^{III} radicals are hydrogen, and all the R^{IV} radicals are methyl. Moreover, are particularly preferred the 1,3-diethers of formula (II) in which two or more of the R^{V} radicals are bonded to each other to form one or more condensed cyclic structures, preferably benzene, optionally substituted by R^{VI} radicals. Specially preferred are the compounds of formula (III): 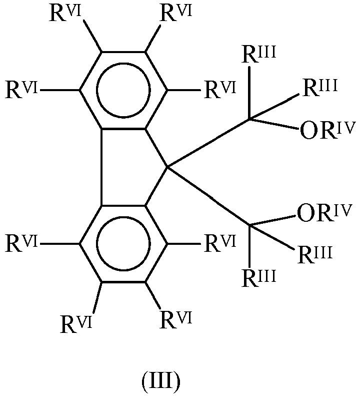 where the R^{III} and R^{IV} radicals have the same meaning defined in formula (I), R^{VI} radicals equal or different are hydrogen; halogens, preferably Cl and F; C₁-C₂₀ alkyl radicals, linear or branched; C₃-C₂₀ cycloalkyl, C₆-C₂₀ aryl, C₇-C₂₀ alkylaryl and C₇-C₂₀ aralkyl radicals, optionally containing one or more heteroatoms selected from the group consisting of N, O, S, P, Si and halogens, in particular Cl and F, as substitutes for carbon or hydrogen atoms, or both.

Specific examples of compounds comprised in formulae (II) and (III) are:
1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)-2,3,4,5-tetrafluorocyclopentadiene;
1,1-bis(methoxymethyl)-3,4-dicyclopentylcyclopentadiene;
1,1--bis(methoxymethyl)indene; 1,1-bis(methoxymethyl)-2,3-dimethylindene;
1,1-bis(methoxymethyl)-4,5,6,7-tetrahydroindene;
1,1-bis(methoxymethyl)-2,3,6,7-tetrafluoroindene;
1,1-bis(methoxymethyl)-4,7-dimethylindene;
1,1-bis(methoxymethyl)-3,6-dimethylindene;
1,1-bis(methoxymethyl)-4-phenylindene;
1,1-bis(methoxymethyl)-4-phenyl-2-methylindene;
1,1-bis(methoxymethyl)-4-cyclohexylindene;
1,1-bis(methoxymethyl)-7-(3,3,3-trifluoropropyl)indene;
1,1-bis(methoxymethyl)-7-trimethyisilylindene;
1,1-bis(methoxymethyl)-7-trifluoromethylindene;
1,1-bis(methoxymethyl)-4,7-dimethyl-4,5,6,7-tetrahydroindene;
1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
1,1-bis(methoxymethyl)-1H-benz[e]indene;
1,1-bis(methoxymethyl)-1H-2-methylbenz[e]indene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene;
9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene.

Preferably, the 1,3-diether/Mg molar ratio ranges from rom 0.035 to 0.010. In a preferred embodiment, the Mg/Ti molar ratio ranges from 4 to 10 and more preferably from 5 to 8.

Preferably, the olefin polymer part of the solid catalyst component (a) is selected from (co)polymers of olefins of formula CH₂=CHR, in which R is hydrogen or a hydrocarbyl radical with 1-12 carbon atoms. More preferably the olefins are selected from ethylene, propylene or mixtures thereof. The use of ethylene or propylene alone is especially preferred.

The amount of olefin polymer in the solid catalyst component (a) preferably ranges from 15 to 75%wt based on the total weight of solid catalyst component (a).

The solid catalyst component (a) is preferably a pre-polymerized solid catalyst component. It is obtainable by subjecting an original solid catalyst component containing Mg, Ti, halogen and an electron donor selected from 1,3-diethers to pre-polymerization conditions in the presence of the olefin monomer and an Al-alkyl compound.

The pre-polymerized solid catalyst component comprises the original solid catalyst component containing Mg, Ti, halogen and an electron donor selected from 1,3-diethers and an amount of polyolefin deriving from the polymerization of the original solid catalyst component with an olefin monomer, of equal to or lower than, 5 times the amount of the said original solid catalyst component.

The terms pre-polymerization conditions means the complex of conditions in terms of temperature, monomer concentration, temperature and amount of reagents suitable to prepare the pre-polymerized catalyst component as defined above.

It has been found particularly advantageous to carry out the pre-polymerization using low amounts of alkyl-Al compound. In particular, said amount could be such as to have an Al/catalyst weight ratio from ranging from 0.001 to 10, preferably from 0.005 to 5 and more preferably from 0.01 to 2.5. An external donor selected from silicon compounds, ethers, esters, amines, heterocyclic compounds, ketones and 1,3-diethers of the general formula (I) previously reported can also be employed. However, use of an external donor in pre-polymerization is not strictly necessary.

The pre-polymerization can be carried out in liquid phase, (slurry or bulk) or in gas-phase at temperatures generally ranging from -20 to 80°C preferably from 0°C to 75°C. Preferably, it is carried out in a liquid diluent in particular selected from liquid light hydrocarbons. Among them, pentane, hexane and heptane are preferred. In an alternative embodiment the pre-polymerization can be carried out in a more viscous medium in particular having a kinematic viscosity ranging from 5 to 100 cSt at 40°C. Such a medium can be either a pure substance or a homogeneous mixture of substances having different kinematic viscosity. Preferably, such a medium is an hydrocarbon medium and more preferably it has a kinematic viscosity ranging from 10 to 90 cSt at 40°C.

The original catalyst component concentration in the liquid diluent preferably ranges from 10 to 300g/l, more preferably from 40 to 200g/l.

The pre-polymerization time can range from 0.25 to 30 hours, particularly from 0.5 to 20 hours and more specifically from 1 to 15 hours. The olefin monomer to be pre-polymerized can be fed in a predetermined amount and in one step in the reactor before the prepolymerization. In an alternative embodiment the olefin monomer is continuously supplied to the reactor during polymerization at the desired rate.

The original solid catalyst component not containing the olefin polymer is preferably characterized by a porosity, measured by the mercury method, due to pores with radius equal to or lower than 1µm, ranging from 0.15 cm³/g to 1.5 cm³/g, preferably from 0.3 cm³/g to 0.9 cm³/g and more preferably from 0.4 to 0.9 cm³/g.

The original solid catalyst component and the solid catalyst component (a) as well, comprises, in addition to the above mentioned electron donors, a titanium compound having at least a Ti-halogen bond and a Mg halide. The magnesium halide is preferably MgCl₂ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are TiCl₄ and TiCl₃; furthermore, also Ti-haloalcoholates of formula Ti(OR)_{n-y}X_{y} can be used, where n is the valence of titanium, y is a number between 1 and n-1 X is halogen and R is a hydrocarbon radical having from 1 to 10 carbon atoms.

Preferably, the original catalyst component (a) has an average particle size ranging from 10 to 100 µm.

The alkyl-Al compound (b), which can be the same used in the pre-polymerization, is preferably chosen among the trialkyl aluminum compounds such as for example triethylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as AlEt₂Cl and Al₂Et₃Cl₃.

Preferably, the aluminum alkyl compound (b) should be used in the gas-phase process in amount such that the Al/Ti molar ratio ranges from 10 to 400, preferably from 30 to 250 and more preferably from 40 to 100.

As mentioned the catalyst system includes external electron-donors (ED) selected from several classes. Among ethers, preferred are the 1,3 diethers also disclosed as internal donors in the solid catalyst component (a). Among esters, preferred are the esters of aliphatic saturated mono or dicarboxylic acids such as malonates, succinates and glutarates. Among heterocyclic compounds 2,2,6,6-tetramethyl piperidine is particularly preferred. A specific class of preferred external donor compounds is that of silicon compounds having at least a Si-O-C bond. Preferably, said silicon compounds are of formula Rₐ⁵R_{b}⁶Si(OR⁷)_{c}, where a and b are integer from 0 to 2, c is an integer from 1 to 3 and the sum (a+b+c) is 4; R⁵, R⁶, and R⁷, are alkyl, cycloalkyl or aryl radicals with 1-18 carbon atoms optionally containing heteroatoms selected from N, O, halogen and P. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metil-dimethoxysilane. The external electron donor compound used in the main polymerization process is employed used in such an amount to give a molar ratio between the organo-aluminum compound (b) used in the main polymerization process and said electron donor compound of from 2 to 200, preferably from 5 to 150, more preferably from 7 to 100 and especially from 7 to 70.

The gas-phase process can be carried out with any gas-phase reactor or technology. Specifically, it can be carried out operating in one or more fluidized or mechanically agitated bed reactors. Typically, in the fluidized bed reactors the fluidization is obtained by a stream of inert fluidization gas the velocity of which is not higher than transport velocity. As a consequence the bed of fluidized particles can be found in a more or less confined zone of the reactor. In the mechanically agitated bed reactor the polymer bed is kept in place by the gas flow generated by the continuous blade movement the regulation of which also determine the height of the bed. The operating temperature is typically selected between 50 and 85°C, preferably between 60 and 85°C, while the operating pressure is generally set from 0.5 and 8 MPa, preferably between 1 and 5 MPa more preferably between 1.0 and 3.0 MPa. Inert fluidization gases are also useful to dissipate the heat generated by the polymerization reaction and are conveniently selected from nitrogen or preferably saturated light hydrocarbons such as propane, pentane, hexane or mixture thereof.

The polymer molecular weight can be controlled by using the proper amount of hydrogen or any other suitable molecular weight regulator such as ZnEt₂. If hydrogen is used, the hydrogen/propylene molar ratio is generally comprised between 0.0002 and 0.5, the propylene monomer being comprised from 20% to 100% by volume, preferably from 30 to 70% by volume, based on the total volume of the gases present in the reactor. The remaining portion of the feeding mixture is comprised of inert gases and one or more α-olefin comonomers, if any.

Another gas-phase technology usable according to the present disclosure comprises the use of gas-phase polymerization devices comprising at least two interconnected polymerization zones. The process is carried out in a first and in a second interconnected polymerization zone to which propylene and ethylene or propylene and alpha-olefins are fed in the presence of a catalyst system and from which the polymer produced is discharged. The growing polymer particles flow through the first of said polymerization zones (riser) under fast fluidization conditions, leave said first polymerization zone and enter the second of said polymerization zones (downcomer) through which they flow in a densified form under the action of gravity, leave said second polymerization zone and are reintroduced into said first polymerization zone, thus establishing a circulation of polymer between the two polymerization zones. Generally, the conditions of fast fluidization in the first polymerization zone is established by feeding the monomers gas mixture below the point of reintroduction of the growing polymer into said first polymerization zone. The velocity of the transport gas into the first polymerization zone is higher than the transport velocity under the operating conditions and is normally between 2 and 15 m/s. In the second polymerization zone, where the polymer flows in densified form under the action of gravity, high values of density of the solid are reached which approach the bulk density of the polymer; a positive gain in pressure can thus be obtained along the direction of flow, so that it becomes possible to reintroduce the polymer into the first reaction zone without the help of mechanical means. In this way, a "loop" circulation is set up, which is defined by the balance of pressures between the two polymerization zones and by the head loss introduced into the system. Also in this case, one or more inert gases, such as nitrogen or an aliphatic hydrocarbon, are maintained in the polymerization zones, in such quantities that the sum of the partial pressures of the inert gases is preferably between 5 and 80% of the total pressure of the gases. The operating temperature ranges from 50 and 85°C, preferably between 60 and 85°C, while the operating pressure ranges from 0.5 to 10 MPa, preferably between 1.5 and 6 MPa. Preferably, the catalyst components are fed to the first polymerization zone, at any point of said first polymerization zone. However, they can also be fed at any point of the second polymerization zone. The use of molecular weight regulator is carried out under the previously described conditions. By the use of the means described in WO00/02929 it is possible to totally or partially prevent that the gas mixture present in the riser enters the downcomer; in particular, this is preferably obtained by introducing in the downer a gas and/or liquid mixture having a composition different from the gas mixture present in the riser. According to a particularly advantageous embodiment of the present invention, the introduction into the downcomer of the said gas and/or liquid mixture having a composition different from the gas mixture present in the riser is effective in preventing the latter mixture from entering the downcomer. Therefore, it is possible to obtain two interconnected polymerization zones having different monomer compositions and thus able to produce polymers with different properties.

The pre-polymerization process for the preparation of the solid catalyst component (a) can be in principle carried out in a pre-polymerization section immediately upstream the gas-phase reactor. However, due to the relatively low degree of pre-polymerization it is preferred that said pre-polymerization process is carried out in a batch dedicated plant. The obtained catalyst component (a) can then be stored and fed to the polymerization plant when needed.

As explained, when in specific zones of the reactor the temperature reaches higher values due to undesired polymerization of fine particle, reactor operation problems can arise. The examples of the present application clearly show that when the catalyst system of the present disclosure is used the activity of the catalyst at temperature higher than 85°C strongly decreases thereby showing self-extinguish properties that ensures for reduced or eliminate fouling problems. In connection with the present application, a satisfying level of self-extinguishing properties is present if the polymerization activity at temperature higher than 85°C is 70% or less, more preferably 65% or less and especially 60% or less, the value of the polymerization activity at 70°C. It is therefore a further object of the present disclosure a method for carrying out a self-extinguishing gas-phase polymerization process for the polymerization of propylene comprising feeding into a gas-phase polymerization reactor propylene optionally in mixture with minor amounts of other olefins, and a catalyst system comprising:
(a) a solid catalyst component comprising Mg, Ti, halogen, an electron donor selected from 1,3-diethers and an olefin polymer in an amount ranging from 10 to 85% of the total weight of the solid catalyst component;
(b) an aluminum alkyl compound and
(c) an external electron donor compound (ED) selected from silicon compounds, ethers, esters, amines, heterocyclic compounds, ketones and any mixture thereof; said components (b) and (c) being employed in amounts such that the Al/(ED) molar ratio ranges from 2 to 200.

All the preferred and particular embodiments previously described also apply to the above described method.

It is worth noting that the catalyst of the present disclosure show, together with self-extinguishing properties, also the capability to polymerize at temperature lower than 85°C giving simultaneously products in high yields, high steroregularity and valuable morphological properties expressed by bulk density values over 0.42 cm³/g.

### EXAMPLES

The following examples are given in order to better illustrate the invention without limiting it in any manner.

### CHARACTERIZATION

### Determination of X.I.

2.5 g of polymer were dissolved in 250 ml of o-xylene under stirring at 135°C for 30 minutes, then the solution was cooled to 25°C and after 30 minutes the insoluble polymer was filtered. The resulting solution was evaporated in nitrogen flow and the residue was dried and weighed to determine the percentage of soluble polymer and then, by difference, the X.I. %.

### Average Particle Size of the adduct, catalysts and pre-polymers

Determined by a method based on the principle of the optical diffraction of monochromatic laser light with the "Malvern Instr. 2600" apparatus. The average size is given as P50.

### Melt flow rate (MFR)

Determined according to ISO 1133 (230°C, 2.16 Kg)

### Porosity and surface area with mercury:

The measure is carried out using a "Porosimeter 2000 series" by Carlo Erba.

The porosity is determined by absorption of mercury under pressure. For this determination use is made of a calibrated dilatometer (diameter 3 mm) CD3 (Carlo Erba) connected to a reservoir of mercury and to a high-vacuum pump (1·10-2 mbar). A weighed amount of sample is placed in the dilatometer. The apparatus is then placed under high vacuum (<0.1 mm Hg) and is maintained in these conditions for 20 minutes. The dilatometer is then connected to the mercury reservoir and the mercury is allowed to flow slowly into it until it reaches the level marked on the dilatometer at a height of 10 cm. The valve that connects the dilatometer to the vacuum pump is closed and then the mercury pressure is gradually increased with nitrogen up to 140 kg/cm². Under the effect of the pressure, the mercury enters the pores and the level goes down according to the porosity of the material.

The porosity (cm3/g), due to pores up to 1µm for catalysts (10µm for polymers), the pore distribution curve, and the average pore size are directly calculated from the integral pore distribution curve which is function of the volume reduction of the mercury and applied pressure values (all these data are provided and elaborated by the porosimeter associated computer which is equipped with a "MILESTONE 200/2.04" program by C. Erba.

### Poured Bulk Density [g/cm³]: measured according to DIN-53194

### General procedure for the preparation of MgCl2•(EtOH)ₘ adducts.

An initial amount of microspheroidal MgCl₂·2.8C₂H₅OH was prepared according to the method described in Example 2 of USP 4,399,054 but operating at 3,000 rpm instead of 10,000. The so obtained adduct having an average particle size of 35 µm was then subject to thermal dealcoholation at increasing temperatures from 30 to 130°C operating in nitrogen current until the molar alcohol content per mol of Mg is 1.99. The final particle size was determined to be P50= 40 µm.

### Preparation of non-prepolymerized solid catalyst component - general procedure.

Into a 3.0-liter round bottom flask, equipped with mechanical stirrer, cooler and thermometer 2.0 l of TiCl₄ were introduced at room temperature under nitrogen atmosphere. After cooling at -5°C, while stirring, 100 g of microspheroidal MgCl₂·2.0C₂H₅OH were introduced. The temperature was then raised from -5°C up to 40°C at a speed of 0.4°C/min. When the temperature of 40°C was reached, 26.7 g of 9,9-bis(methoxymethyl)fluorene, as internal donor, was introduced. At the end of the addition, the temperature was increased up to 100°C at a speed of 0.8°C/min and maintained fixed at this value for 60 minutes. Thereafter, stirring was stopped, the solid product was allowed to settle and the supernatant liquid was siphoned off maintaining the temperature at 100°C. After the supernatant was removed, additional 1.9 l of fresh TiCl₄ were added and the mixture was then heated at 110°C and kept at this temperature for 30 minutes. Once again the stirring was interrupted; the solid product was allowed to settle and the supernatant liquid was siphoned off maintaining the temperature at 110°C. A third aliquot of fresh TiCl₄ (1.9 l) was added, the mixture was maintained under agitation at 110°C for 30 minutes and then the supernatant liquid was siphoned off. The solid was washed with anhydrous i-hexane five times (5 x 1.0 l) in temperature gradient up to 60°C and one time (1.0 l) at room temperature. The solid was finally dried under vacuum and analyzed. Catalyst composition: Mg=15.1 wt%; Ti=4.4 wt%; I.D.=14.5 wt%; P50= 41.2 µm.

### General procedure for gas phase propylene polymerization

A lab-scale fluidized bed reactor, equipped with recirculation gas compressor, heat exchanger, and automated temperature controller was used to polymerize propylene in gas phase. The fluidized bed reactor is set at the desired temperature, pressure and composition, such to reach the targets values after feeding the pre-polymerized catalyst into it. Target values for the polymerization are: total pressure 20 barg, composed of 93.8 %mol of propylene, 5 %mol of propane, and 1.2 %mol of hydrogen.

In a glass flask, 0.35 g of triethyl aluminum, methyl-cyclohexyl dimethoxy silane (ED) when used, and about 40-100 mg of solid catalyst component (or prepolymerized catalyst) were charged in 100mL of i-hexane. The catalyst is pre-contacted at room temperature for 10 minutes. Then, the content of the flask is fed into a 0.8L autoclave. The autoclave was closed, 100 grams of liquid propane (and from 6 to 40 grams of propylene only in comparative examples 2-4 where the in-line prepolymerization was performed) were added. The catalyst mixture was stirred at 30°C for 15 min (unless otherwise specified). Subsequently, the content of the autoclave was fed to the fluidized bed reactor that was set as described above. The polymerization was carried out for 2 hours, while the pressure of the reactor was kept constant by feeding continuously gaseous propylene, enough to make up for the reacted monomer. After 2 hours, the formed polymer bed is discharged, degassed and characterized.

### EXAMPLE 1

### Preparation of the pre-polymerized catalyst

Into a 250 cm³ glass-vessel/stainless steel autoclave with a mechanical anchor stirrer, at room temperature and under a nitrogen atmosphere, 100 cm³ of i-hexane containing 0.28 g of tri-n-octyl aluminum (TNOA) and 9.2 g of the spherical catalyst prepared as described above were introduced. The stirring was set at about 300 rpm, and the internal temperature was increased to 50°C during a time of 30 minutes. Maintaining constant the temperature of the reactor, ethylene was carefully introduced with a constant flow for 4 h. The polymerization was discontinued when a theoretical conversion of 3 g of polymer per g of catalyst was deemed to be reached. The resulting pre-polymerized catalyst was dried under vacuum at room temperature and analyzed. It contained 2.97 g of polyethylene per g of solid catalyst (74% polymer). Prepolymer composition: Mg=3.8 wt%; Ti=1.1 wt%; I.D.=3.5 wt%; P50= 73.4 µm. The catalyst component was then used in a double run gas phase polymerization of propylene according to general procedure carried out at 70° and 90°C respectively.

### EXAMPLE 2

### Preparation of the pre-polymerized catalyst

Into a 250 cm³ glass-vessel/stainless steel autoclave with a mechanical anchor stirrer, at room temperature and under a nitrogen atmosphere, 100 cm³ of i-hexane containing 0.63 g of tri-n-octyl aluminum (TNOA) and 20.2 g of the spherical catalyst prepared as described above were introduced. The stirring was set at about 300 rpm, and the internal temperature was increased to 50°C during a time of 30 minutes. Maintaining constant the temperature of the reactor, ethylene was carefully introduced with a constant flow for 4 h. The polymerization was discontinued when a theoretical conversion of 0.8 g of polymer per g of catalyst was deemed to be reached. The resulting pre-polymerized catalyst was dried under vacuum at room temperature and analyzed. It contained 0.84 g of polyethylene per g of solid catalyst (45.6% of polymer). Pre-polymer composition: Mg=8.2 wt%; Ti=2.5 wt%; I.D.=6.6 wt%; P50= 52.1 µm. The catalyst component was then used in a double run gas phase polymerization of propylene according to general procedure carried out at 70° and 90°C respectively.

### EXAMPLE 3

### Preparation of the pre-polymerized catalyst)

Into a 250 cm³ glass-vessel/stainless steel autoclave with a mechanical anchor stirrer, at room temperature and under a nitrogen atmosphere, 100 cm³ of i-hexane containing 0.60 g of tri-n-octyl aluminum (TNOA) and 19.8 g of the spherical catalyst prepared as described above were introduced. The stirring was set at about 300 rpm, and the internal temperature was increased to 50°C during a time of 30 minutes. Maintaining constant the temperature of the reactor, ethylene was carefully introduced with a constant flow for 3 h. The polymerization was discontinued when a theoretical conversion of 0.5 g of polymer per g of catalyst was deemed to be reached. The resulting pre-polymerized catalyst was dried under vacuum at room temperature and analyzed. It contained 0.55 g of polyethylene per g of solid catalyst (35.4% polymer). Prepolymer composition: Mg=9.8 wt%; Ti=2.9 wt%; I.D.=8.7 wt%; P50= 47.7 µm. The catalyst component was then used in a double run gas phase polymerization of propylene according to general procedure carried out at 70° and 90°C respectively.

### EXAMPLE 4

### Preparation of the pre-polymerized catalyst

Into a 250 cm³ glass-vessel/stainless steel autoclave with a mechanical anchor stirrer, at room temperature and under a nitrogen atmosphere, 100 cm³ of i-hexane containing 0.63 g of tri-n-octyl aluminum (TNOA) and 20.5 g of the spherical catalyst prepared as described above were introduced. The stirring was set at about 300 rpm, and the internal temperature was increased to 50°C during a time of 30 minutes. Maintaining constant the temperature of the reactor, ethylene was carefully introduced with a constant flow for 2 h. The polymerization was discontinued when a theoretical conversion of 0.25 g of polymer per g of catalyst was deemed to be reached. The resulting pre-polymerized catalyst was dried under vacuum at room temperature and analyzed. It contained 0.28 g of polyethylene per g of solid catalyst (21.8% polymer). Pre-polymer composition: Mg=11.8 wt%; Ti=3.4 wt%; I.D.=9.0 wt%; P50= 43.3 µm. The catalyst component was then used in a double run gas phase polymerization of propylene according to general procedure carried out at 70° and 90°C respectively.

### COMPARATIVE EXAMPLE 1

The catalyst component prepared according to the general procedure, without being subject to pre-polymerization, was used in a double run gas phase polymerization of propylene according to general procedure carried out at 70° and 90°C respectively.

### COMPARATIVE EXAMPLES 2-4

The catalyst component prepared according to the general procedure, was used in the gas phase polymerization of propylene according to general procedure with the difference that an in-line pre-polymerization was carried out. In the first series of double run carried out at 70° and 90°C respectively (Comparative 2) 6 g of propylene were pre-polymerized for 5 minutes. In the second series (Comparative 3) 6 g of propylene were pre-polymerized for 15 minutes, and in the third series (Comparative 4) 40 grams of propylene were pre-polymerized for 15 minutes. The polymer conversion was measured by weighting the pre-polymer produced in a parallel run carried out under identical conditions. Taking into account one gram of catalyst component the conversion in comparative 2 was 10 (90% polymer), in comparative 3 was 24 (96% polymer) and in comparative 4 was 88 (98.8% polymer).

### EXAMPLE 5

### Preparation of the pre-polymerized catalyst in oil-slurry

Into a 250 cm³ glass-vessel/stainless steel autoclave with a mechanical anchor stirrer, at room temperature and under a nitrogen atmosphere, 80 cm³ of dried oil (Winog-70), 20 cm³ of i-hexane containing 0.62 g of tri-n-octyl aluminum (TNOA) and 19.0 g of the spherical catalyst prepared as described above were introduced. The stirring was set at about 300 rpm, and the internal temperature was increased to 70°C during a time of 30 minutes. Maintaining constant the temperature of the reactor, 1.0 bar of hydrogen overpressure was introduced while ethylene was carefully fed with a constant flow for 4 h. The polymerization was discontinued when a theoretical conversion of 1 g of polymer per g of catalyst was deemed to be reached. The resulting pre-polymerized catalyst was maintained in oil/i-hexane slurry. 50 cm³ of slurry were diluted with i-hexane under stirring, the solvent siphoned off and the residual solid prepolymer washed 3 times with 50 ml of dried i-hexane, and analyzed. It contained 1.01 g of polyethylene per g of solid catalyst. Prepolymer composition: Mg=7.5 wt%; Ti=2.0 wt%; I.D.=6.3wt%; P50= 57.6 µm. The catalyst component was then used in a double run gas phase polymerization of propylene according to general procedure carried out at 70° and 90°C respectively.

### EXAMPLE 6

### Preparation of the pre-polymerized catalyst in oil-slurry

Into a 250 cm³ glass-vessel/stainless steel autoclave with a mechanical anchor stirrer, at room temperature and under a nitrogen atmosphere, 80 cm³ of dried oil (Winog-70), 20 cm³ of i-hexane containing 4.4 g of tri-ethyl aluminum (TEA), 16.95 g of the spherical catalyst prepared as described above and 0.1 g of cyclo-hexyl-methyl dimethoxy silane (ED) were introduced. The stirring was set at about 300 rpm, and maintained, with continuous stirring at room temperature for 30 minutes and then the internal temperature was decreased to 10°C. Maintaining constant the temperature of the reactor, propylene was carefully fed with a constant flow for 4 h. The polymerization was discontinued when a theoretical conversion of 1.4 g of polymer per g of catalyst was deemed to be reached. The resulting pre-polymerized catalyst was maintained in oil/i-hexane slurry. 50 cm³ of slurry was diluted with i-hexane under stirring, the solvent siphoned off and the residual solid prepolymer washed 3 times with 50 ml of dried i-hexane, and analyzed. It contained 1.19 g of polypropylene per g of solid catalyst. Prepolymer composition: Mg=7.1 wt%; Ti=1.9 wt%; I.D.=5.5 wt%; P50= 69.9 µm. The catalyst component was then used in a double run gas phase polymerization of propylene according to general procedure carried out at 70° and 90°C respectively.

### EXAMPLES 7-9 and COMPARATIVE 5

### Preparation of the pre-polymerized catalyst

Into a 250 cm³ glass-vessel/stainless steel autoclave with a mechanical anchor stirrer, at room temperature and under a nitrogen atmosphere, 100 cm³ of i-hexane containing 0.60 g of tri-n-octyl aluminum (TNOA) and 19.6 g of the spherical catalyst prepared as described above were introduced. The stirring was set at about 300 rpm, and the internal temperature was increased to 50°C during a time of 30 minutes. Maintaining constant the temperature of the reactor, ethylene was carefully introduced with a constant flow for 4 h. The polymerization was discontinued when a theoretical conversion of 1 g of polymer per g of catalyst was deemed to be reached. The resulting pre-polymerized catalyst was dried under vacuum at room temperature and analyzed. It contained 1.00 g of polyethylene per g of solid catalyst. Prepolymer composition: Mg=7.6 wt%; Ti=2.1 wt%; I.D.=6.2 wt%; P50= 54.2 µm. The catalyst component was then used in a double run gas phase polymerization of propylene according to general procedure carried out at 70° and 90°C respectively.

### EXAMPLE 10

### Preparation of solid catalyst component.

The solid catalyst component was prepared according to the general procedure with the only difference that as internal donor (ID) 2-i-propyl-2-i-butyl-1,3-dimetoxy propane was used instead of 9,9-bis(methoxymethyl)fluorene. The catalyst composition was the following: Mg 18.3 wt%; Ti 3.1 wt%; ID 14.7 wt%; P50 40.4 µm.

### Preparation of the pre-polymerized catalyst

Into a 250 cm³ glass-vessel/stainless steel autoclave with a mechanical anchor stirrer, at room temperature and under a nitrogen atmosphere, 150 cm³ of i-hexane containing 0.32 g of tri-n-octyl aluminum (TNOA) and 14.5 g of the catalyst prepared as described above were introduced. The stirring was set at about 300 rpm, and the internal temperature was increased to 50°C during a time of 30 minutes. Maintaining constant the temperature of the reactor, ethylene was carefully introduced with a constant flow for 2 h. The polymerization was discontinued when a theoretical conversion of 0.25 g of polymer per g of catalyst was deemed to be reached. The resulting pre-polymerized catalyst was dried under vacuum at room temperature and analyzed. It contained 0.28 g of polyethylene per g of solid catalyst (22 % polymer). Prepolymer composition: Mg 14.3wt%; Ti 2.3 wt%; ID 11.7wt%; at solvent zero; P50 43.0 µm. The catalyst component was then used in a double run gas phase polymerization of propylene according to general procedure carried out at 70° and 90°C respectively.

### EXAMPLE 11

### Preparation of the pre-polymerized catalyst

Into a 250 cm³ glass-vessel/stainless steel autoclave with a mechanical anchor stirrer, at room temperature and under a nitrogen atmosphere, 150 cm³ of i-hexane containing 0.24 g of tri-n-octyl aluminum (TNOA) and 10.46 g of the spherical catalyst prepared as described in Example 10 were introduced. The stirring was set at about 300 rpm, and the internal temperature was increased to 50°C during a time of 30 minutes. Maintaining constant the temperature of the reactor, ethylene was carefully introduced with a constant flow for 4 h. The polymerization was discontinued when a theoretical conversion of 1.0 g of polymer per g of catalyst was deemed to be reached. The resulting pre-polymerized catalyst was dried under vacuum at room temperature and analyzed. It contained 1.13 g of polyethylene per g of solid catalyst (53 % polymer). Prepolymer composition: Mg 8.6 wt%; Ti 1.4 wt%; at solvent zero; P50 63.0 µm. The catalyst component was then used in a double run gas phase polymerization of propylene according to general procedure carried out at 70° and 90°C respectively.

### EXAMPLE 12

### Preparation of the pre-polymerized catalyst

Into a 250 cm³ glass-vessel/stainless steel autoclave with a mechanical anchor stirrer, at room temperature and under a nitrogen atmosphere, 150 cm³ of i-hexane containing 1.35 g of tri-n-octyl aluminum (TNOA) and 12.12 g of the spherical catalyst prepared as described above (Example 10) and 0.14 g of cyclo-hexyl-methyl dimethoxy silane (CHMMS) were introduced. The stirring was set at about 300 rpm, and maintained, with continuous stirring at room temperature for 30 minutes and then the internal temperature was decreased to 10°C. Maintaining constant the temperature of the reactor, propylene was carefully fed with a constant flow for 3 h. The polymerization was discontinued when a theoretical conversion of 0.5 g of polymer per g of catalyst was deemed to be reached. The resulting pre-polymerized catalyst was dried under vacuum at room temperature and analyzed. It contained 0.58 g of polypropylene per g of solid catalyst. Prepolymer composition: Mg 11.6 wt%; Ti 1.9 wt%; I.D. 8.6 wt%; P50 59.0 µm. The catalyst component was then used in a double run gas phase polymerization of propylene according to general procedure carried out at 70° and 90°C respectively.

### COMPARATIVE EXAMPLE 6

A catalyst component prepared according to the general procedure, without being subject to pre-polymerization, with the difference that 1,2-dimethoxypropane (DMP) was used as ID. The catalyst composition was the following: Mg 16.8 wt%; Ti 5.5 wt%; ID 4.7 wt%; It was used in a single run gas phase polymerization of propylene according to general procedure carried out at 70° .

**TABLE 1**

| Example | Al/Ti | Al/ED | T | Activity | Residual Activity @90°C | BD | MI "L" | X.I. |
|---|---|---|---|---|---|---|---|---|
| | mol | mol | °C | Kg _{PP}/g_{cat} | % | g/cm³ | g/10' | wt.% |
| 1 | 131 | 16.5 | 70 | 7.2 | | 0.434 | 10.4 | 98.5 |
| | 124 | 16.5 | 90 | 3.6 | 50 | | | |
| 2 | 102 | 16.5 | 70 | 14.5 | | 0.432 | 13.0 | 98.2 |
| | 56 | 16.5 | 90 | 7.9 | 55 | | | |
| 3 | 97 | 16.5 | 70 | 15.4 | | 0.440 | 12.0 | 98.2 |
| | 49 | 16.5 | 90 | 8.3 | 54 | | | |
| 4 | 84 | 16.5 | 70 | 20.8 | | 0.421 | 9.0 | 98.2 |
| | 38 | 16.5 | 90 | 10.2 | 49 | | | |
| Comp. 1 | 80 | 16.5 | 70 | 24 | | 0.381 | 7.4 | 98.8 |
| | 88 | 16.5 | 90 | 15.5 | 65 | | | |
| Comp. 2 | 73 | 16.5 | 70 | 20 | | 0.399 | 10.0 | 98.1 |
| | 67 | 16.5 | 90 | 13.4 | 67 | | | |
| Comp. 3 | 77 | 16.5 | 70 | 18.6 | | 0.408 | 9.7 | 98.2 |
| | 78 | 16.5 | 90 | 13.4 | 72 | | | |
| Comp. 4 | 73 | 16.5 | 70 | 20.4 | | 0.392 | 9.4 | 98.1 |
| | 69 | 16.5 | 90 | 15.1 | 74 | | | |
| 5 | 132 | 16.5 | 70 | 15.7 | | 0.439 | 9.2 | 98.2 |
| | 92 | 16.5 | 90 | 7.4 | 47 | | | |
| 6 | 142 | 16.5 | 70 | 13.5 | | 0.439 | 10.7 | 97.9 |
| | 116 | 16.5 | 90 | 6.3 | 46 | | | |
| 7 | 92 | 16.5 | 70 | 11.3 | | 0.427 | 16.4 | 98.0 |
| | 102 | 16.5 | 90 | 5.6 | 49 | | | |
| 8 | 205 | 50 | 70 | 13.7 | | 0.426 | 14 | 97.5 |
| | 194 | 50 | 90 | 8.0 | 59 | | | |
| 9 | 116 | 99 | 70 | 16.3 | | 0.434 | 17.2 | 97.1 |
| | 109 | 99 | 90 | 9.7 | 60 | | | |
| COMP. 5 | 97 | --- | 70 | 19.9 | | 0.416 | 23.3 | 96.9 |
| | 85 | --- | 90 | 16.3 | 82 | | | |
| 10 | 118 | 16.5 | 70 | 17.2 | | 0.419 | 13.7 | 98.3 |
| | 120 | 16.5 | 90 | 7.4 | 43 | | | |
| 11 | 131 | 16.5 | 70 | 8.9 | | 0.409 | 12.3 | 98.5 |
| | *129* | *16.5* | *90* | *4.1* | *46* | | | |
| 12 | 152 | 16.5 | 70 | 6.6 | | 0.423 | 12.6 | 98.2 |
| | *130* | *16.5* | *90* | *3.6* | *55* | | | |
| COMP. 6 | 80 | 16.5 | 70 | 11.7 | | 0.301 | 12.4 | 89.9 |

## Claims

1. A gas-phase process for the homo or copolymerization of propylene with other olefins, carried out in the presence of a catalyst system comprising:
(a) a solid catalyst component comprising a titanium compound having at least a Ti-halogen bond, a Mg halide, an electron donor selected from 1,3-diethers and an olefin polymer in an amount ranging from 10 to 85% of the total weight of the solid catalyst component and in which the 1,3-diether/Mg molar ratio ranges from 0.030 to 0.150;
(b) an aluminum alkyl compound and
(c) an external electron donor (ED) compound selected from silicon compounds, ethers, esters, amines, heterocyclic compounds, ketones; said components (b) and (c) being employed in amounts such that the Al/(ED) molar ratio ranges from 2 to 200.

2. The gas phase process according to claim 1 in which the solid catalyst component has an average particle size ranging from 10 to 100 µm

3. The gas phase process according to claim 1 in which the 1,3-diethers mentioned above, particularly preferred are the compounds of formula (I) 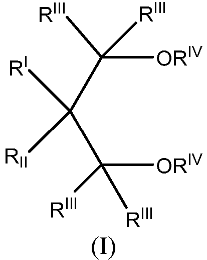 where R^{I} and R^{II} are the same or different and are hydrogen or linear or branched C₁-C₁₈ hydrocarbon groups which can also form one or more cyclic structures; R^{III} groups, equal or different from each other, are hydrogen or C₁-C₁₈ hydrocarbon groups; R^{IV} groups equal or different from each other, have the same meaning of R^{III} except that they cannot be hydrogen; each of R^{I} to R^{IV} groups can contain heteroatoms selected from halogens, N, O, S and Si.

4. The process according to claim 3 in which the 1,3 diethers are selected from those of formula of formula (III): 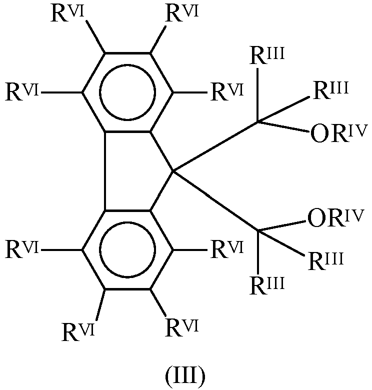 where the R^{VI} radicals equal or different are hydrogen; halogens, preferably Cl and F; C₁-C₂₀ alkyl radicals, linear or branched; C₃-C₂₀ cycloalkyl, C₆-C₂₀ aryl, C₇-C₂₀ alkylaryl and C₇-C₂₀ aralkyl radicals, optionally containing one or more heteroatoms selected from the group consisting of N, 0, S, P, Si and halogens, in particular Cl and F, as substitutes for carbon or hydrogen atoms, or both; the radicals R^{III} and R^{IV} are as defined in claim 3.

5. The process according to claim 1 in which the Mg/Ti molar ratio ranges from 4 to 10.

6. The process according to claim 1 in which the olefin polymer is selected from (co)polymers of olefins of formula CH₂=CHR, in which R is hydrogen or a hydrocarbyl radical with 1-12 carbon atoms.

7. The process according to claim 6 in which the olefins are selected from ethylene, propylene or mixtures thereof.

8. The process according to claim 6 in which the weight of olefin polymer ranges from 15 to 75% of the total weight of the solid catalyst component (a).

9. The process according to claim 1 in which the alkyl-Al compound (b) is chosen among the trialkyl aluminum compounds.

10. The process according to claim 1 in which the aluminum alkyl compound should be used in amount such that the Al/Ti molar ratio ranges from 10 to 400.

11. The process according to claim 1 in which the external donor compounds is selected from silicon compounds having at least a Si-O-C bond.

12. The process according to claim 11 in which silicon compounds are of formula Rₐ⁵R_{b}⁶Si(OR⁷)_{c}, where a and b are integer from 0 to 2, c is an integer from 1 to 3 and the sum (a+b+c) is 4; R⁵, R⁶, and R⁷, are alkyl, cycloalkyl or aryl radicals with 1-18 carbon atoms optionally containing heteroatoms selected from N, O, halogen and P.

13. The process of claim 1 carried out in a gas-phase fluidized bed reactor.

14. The process of claim 1 carried out in a gas-phase mechanically agitated bed reactor.

## Patentansprüche

1. Gasphasenverfahren zur Homo- oder Copolymerisation von Propylen mit anderen Olefinen, das in Gegenwart eines Katalysatorsystems durchgeführt wird, welches umfasst:
(a) eine feste Katalysatorkomponente, umfassend eine Titanverbindung mit mindestens einer Ti-Halogen-Bindung, ein Mg-Halogenid, einen Elektronendonor ausgewählt aus 1,3-Diethern und ein Olefinpolymer in einer Menge im Bereich von 10 bis 85 % des Gesamtgewichts der festen Katalysatorkomponente, und wobei das Molverhältnis von 1,3-Diethern/Mg im Bereich von 0,030 bis 0,150 liegt;
(b) eine Aluminiumalkylverbindung und
(c) eine externe Elektronendonor- (ED)-Verbindung ausgewählt aus Siliciumverbindungen, Ethern, Estern, Aminen, heterocyclischen Verbindungen, Ketonen; wobei die Komponenten (b) und (c) in solchen Mengen verwendet werden, dass das Molverhältnis von Al/(ED) im Bereich von 2 bis 200 liegt.

2. Gasphasenverfahren nach Anspruch 1, wobei die feste Katalysatorkomponente eine durchschnittliche Partikelgröße im Bereich von 10 bis 100 µm hat.

3. Gasphasenverfahren nach Anspruch 1, wobei die oben genannten 1,3-Diether besonders bevorzugt die Verbindungen mit der Formel (I) sind: 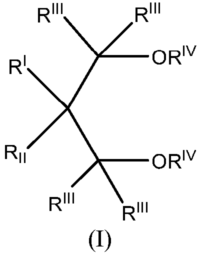 wobei R^{I} und R^{II} gleich oder voneinander verschieden sind und Wasserstoff oder lineare oder verzweigte C₁- bis C₁₈-Kohlenwasserstoffgruppen sind, die auch eine oder mehrere cyclische Strukturen bilden können; Gruppen R^{III}, die gleich oder voneinander verschieden sind, Wasserstoff oder C₁- bis C₁₈-Kohlenwasserstoffgruppen sind; Gruppen R^{IV}, die gleich oder voneinander verschieden sind, die gleiche Bedeutung wie R^{III} haben, außer dass sie nicht Wasserstoff sein können; jede der Gruppen R^{I} bis R^{IV} Heteroatome ausgewählt aus Halogenen, N, O, S und Si enthalten kann.

4. Verfahren nach Anspruch 3, wobei die 1,3-Diether ausgewählt sind aus jenen, die die Formel der Formel (III) haben: 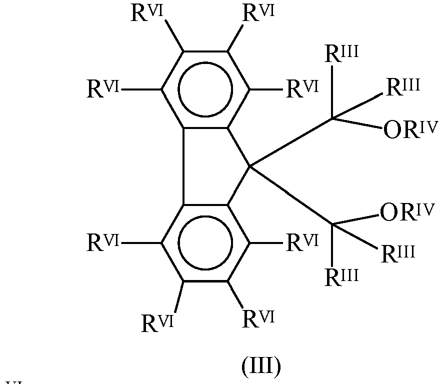 wobei die Reste R^{VI}, die gleich oder voneinander verschieden sein können, Wasserstoff; Halogene, vorzugsweise Cl und F; lineare oder verzweigte C₁- bis C₂₀-Alkylreste; C₃- bis C₂₀-Cycloalkyl-, C₆- bis C₂₀-Aryl-, C₇- bis C₂₀-Alkylaryl- und C₇- bis C₂₀-Aralkylreste sind, die gegebenenfalls ein oder mehrere Heteroatome ausgewählt aus der Gruppe bestehend aus N, O, S, P, Si und Halogenen, insbesondere Cl und F, als Ersatz für Kohlenstoff- oder Wasserstoffatome enthalten, oder beides; wobei die Reste R^{III} und R^{IV} wie in Anspruch 3 definiert sind.

5. Verfahren nach Anspruch 1, wobei das Molverhältnis von Mg/Ti im Bereich von 4 bis 10 liegt.

6. Verfahren nach Anspruch 1, wobei das Olefinpolymer ausgewählt ist aus (Co)polymeren von Olefinen mit der Formel CH₂=CHR, in der R Wasserstoff oder ein Kohlenwasserstoffrest mit 1 bis 12 Kohlenstoffatomen ist.

7. Verfahren nach Anspruch 6, wobei die Olefine ausgewählt sind aus Ethylen, Propylen oder Mischungen davon.

8. Verfahren nach Anspruch 6, wobei das Gewicht des Olefinpolymers im Bereich von 15 bis 75 % des Gesamtgewichts der festen Katalysatorkomponente (a) liegt.

9. Verfahren nach Anspruch 1, wobei die Alkyl-Al-Verbindung (b) ausgewählt ist aus den Trialkylaluminiumverbindungen.

10. Verfahren nach Anspruch 1, wobei die Aluminiumalkylverbindung in einer solchen Menge verwendet werden soll, dass das Molverhältnis von Al/Ti im Bereich von 10 bis 400 liegt.

11. Verfahren nach Anspruch 1, wobei die externen Donorverbindungen ausgewählt sind aus Siliciumverbindungen mit mindestens einer Si-O-C-Bindung.

12. Verfahren nach Anspruch 11, wobei die Siliciumverbindungen die Formel Rₐ⁵Rb⁶Si(OR⁷)_{c} haben, wobei a und b ganze Zahlen von 0 bis 2 sind, c eine ganze Zahl von 1 bis 3 ist, und die Summe (a+b+c) 4 ist; R⁵, R⁶ und R⁷ Alkyl-, Cycloalkyl- oder Arylreste mit 1 bis 18 Kohlenstoffatomen sind, die gegebenenfalls Heteroatome ausgewählt aus N, O, Halogen und P enthalten.

13. Verfahren nach Anspruch 1, das in einem Gasphasen-Wirbelbettreaktor durchgeführt wird.

14. Verfahren nach Anspruch 1, das in einem Gasphasenreaktor mit mechanisch gerührtem Bett durchgeführt wird.

## Revendications

1. Procédé en phase gazeuse d'homopolymérisation ou de copolymérisation de propylène avec d'autres oléfines, mis en œuvre en présence d'un système catalytique comprenant :
(a) un constituant catalytique solide comprenant un composé de titane présentant au moins une liaison Ti-halogène, un halogénure de Mg, un donneur d'électrons choisi parmi les 1,3-diéthers et un polymère oléfinique en une quantité située dans la plage de 10 à 85 % du poids total du constituant catalytique solide et dans lequel le rapport molaire 1,3-diéthers/Mg est situé dans la plage de 0,030 à 0,150 ;
(b) un composé d'alkylaluminium et
(c) un composé donneur d'électrons externe (ED) choisi parmi les composés de silicium, les éthers, les esters, les amines, les composés hétérocycliques, les cétones ; lesdits constituants (b) et (c) étant employés en des quantités telles que le rapport molaire Al/(ED) est situé dans la plage de 2 à 200.

2. Procédé en phase gazeuse selon la revendication 1, dans lequel le constituant catalytique solide présente une grosseur moyenne de particule située dans la plage de 10 à 100 µm.

3. Procédé en phase gazeuse selon la revendication 1, dans lequel les 1,3-diéthers susmentionnés, particulièrement préférés sont les composés de formule (I) 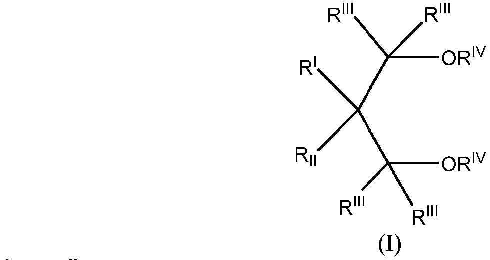 où R¹ et R¹¹ sont identiques ou différents et représentent hydrogène ou des groupes hydrocarbonés en C₁-C₁₈ linéaires ou ramifiés qui peuvent également former une ou plusieurs structures cycliques ; les groupes R^{III}, identiques ou différents les uns des autres, représentent hydrogène ou des groupes hydrocarbonés en C₁-C₁₈ ; les groupes R^{IV}, identiques ou différents l'un de l'autre, présentent la même signification que le R^{III} sauf qu'ils ne peuvent pas représenter hydrogène ; chacun des groupes R^{I} à R^{IV} peut contenir des hétéroatomes choisis parmi les halogènes, N, O, S et Si.

4. Procédé selon la revendication 3, dans lequel les 1,3-diéthers sont choisis parmi ceux de formule (III) : 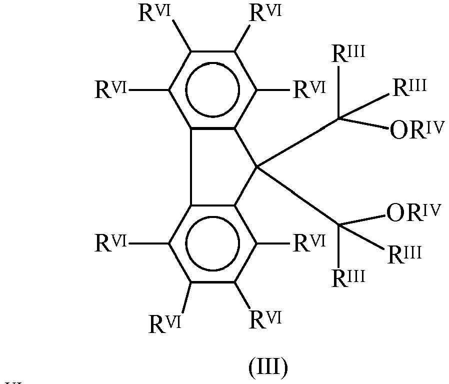 où les radicaux R^{VI}, identiques ou différents, représentent hydrogène ; des halogènes, de préférence Cl et F ; des radicaux alkyle en C₁-C₂₀, linéaires ou ramifiés ; des radicaux cycloalkyle en C₃-C₂₀, aryle en C₆-C₂₀, alkylaryle en C₇-C₂₀ et aralkyle en C₇-C₂₀, contenant éventuellement un ou plusieurs hétéroatomes choisis dans le groupe constitué par N, O, S, P, Si et les halogènes, en particulier Cl et F, en tant que substituts des atomes de carbone ou d'hydrogène ou les deux ; les radicaux R^{III} et R^{IV} sont tels que définis dans la revendication 3.

5. Procédé selon la revendication 1, dans lequel le rapport molaire Mg/Ti est situé dans la plage de 4 à 10.

6. Procédé selon la revendication 1, dans lequel le polymère oléfinique est choisi parmi les (co)polymères oléfiniques de formule CH₂=CHR, dans laquelle R représente hydrogène ou un radical hydrocarbyle comprenant 1 à 12 atomes de carbone.

7. Procédé selon la revendication 6, dans lequel les oléfines sont choisies parmi l'éthylène, le propylène ou leurs mélanges.

8. Procédé selon la revendication 6, dans lequel le poids de polymère oléfinique est situé dans la plage de 15 à 75 % du poids total du constituant catalytique solide (a).

9. Procédé selon la revendication 1, dans lequel le composé d'alkyl-Al (b) est choisi parmi les composés de trialkylaluminium.

10. Procédé selon la revendication 1, dans lequel le composé d'alkylaluminium doit être utilisé en quantité telle que le rapport molaire Al/Ti est situé dans la plage de 10 à 400.

11. Procédé selon la revendication 1, dans lequel les composés donneurs externes sont choisis parmi les composés de silicium présentant au moins une liaison Si-O-C.

12. Procédé selon la revendication 11, dans lequel les composés de silicium sont de formule Rₐ⁵R_{b}⁶Si(OR⁷)_{c}, où a et b représentent un nombre entier de 0 à 2, c représente un nombre entier de 1 à 3 et la somme (a+b+c) vaut 4 ; R⁵, R⁶ et R⁷ représentent des radicaux alkyle, cycloalkyle ou aryle comprenant 1-18 atomes de carbone contenant éventuellement des hétéroatomes choisis parmi N, O, halogène et P.

13. Procédé selon la revendication 1, mis en œuvre dans un réacteur à lit fluidisé en phase gazeuse.

14. Procédé selon la revendication 1, mis en œuvre dans un réacteur à lit agité mécaniquement en phase gazeuse.
